# EUROPÄISCHE PATENTSCHRIFT

(11) **EP 3 564 541 B1**
(45) Veröffentlichungstag und Bekanntmachung des Hinweises auf die Patenterteilung: **28.08.2024**
(21) Anmeldenummer: 19170604.3
(22) Anmeldetag: 23.04.2019
(51) Int. Cl.: F16B 5/01, F16B 1/00, F16B 13/02, B29C 65/08, F16B 37/12

(54) **ADAPTER FÜR PLATTEN, ADAPTERSYSTEM, VERFAHREN ZUM BEFESTIGEN VON ADAPTERN UND VERWENDUNG EINES ADAPTERS**
ADAPTER FOR PANELS, ADAPTER SYSTEM, METHOD FOR SECURING ADAPTERS AND APPLICATION OF AN ADAPTER
ADAPTATEURS DE PLAQUES, SYSTÈME D'ADAPTATEUR, PROCÉDÉ DE FIXATION D'ADAPTATEURS ET UTILISATION D'UN ADAPTATEUR

(30) Priorität: 02.05.2018 DE 102018206726
(43) Veröffentlichungstag der Anmeldung: 06.11.2019
(73) Patentinhaber: Adolf Würth GmbH & Co. KG, 74653 Künzelsau (DE); Würth International AG, 7000 Chur (CH)
(72) Erfinder: Beck, Daniel, 69168 Wiesloch (DE); Schulze Niehues, Thorsten, 74653 Künzelsau (DE)
(74) Vertreter: Patentanwälte Ruff, Wilhelm, Beier, Dauster & Partner mbB

(56) Entgegenhaltungen:
- EP-A1- 2 875 946
- EP-A1- 3 228 879
- EP-A1- 3 296 576
- EP-A2- 1 024 301
- EP-B1- 1 024 301
- WO-A1-2011/042326
- US-A- 3 530 921

## Beschreibung

Die Erfindung betrifft einen Adapter für Platten, insbesondere mit zwei gegenüberliegenden Deckbereichen und einem Kern, wobei die Deckbereiche gegenüber dem Kern mechanisch höher belastbar sind, insbesondere für Leichtbauplatten, wobei die Leichtbauplatten eine erste Deckelplatte, eine zweite Deckelplatte und einen zwischen den Deckelplatten angeordneten Kern mit gegenüber den Deckplatten geringerer Dichte, insbesondere einen Wabenkern, aufweisen. Die Erfindung betrifft auch ein Adaptersystem mit mehreren Adaptern.

Aus der internationalen Offenlegungsschrift WO 2010/060987 A1 ist ein Verfahren zum Fixieren eines Beschlags in einer Leichtbauplatte bekannt. Ein Sackloch wird in eine Schmalseite einer Leichtbauplatte eingebracht und in das Sackloch wird dann der Beschlag eingeführt. Der Beschlag wird mittels Klebstoff in dem Sackloch fixiert.

Aus der europäischen Patentschrift EP 2 640 983 B1 ist ein Dübel zur Befestigung in der Schmalseite einer Leichtbauplatte bekannt. In die Schmalseite der Leichtbauplatte wird ein Sackloch eingefräst, wobei das Sackloch sich bis in die erste Deckplatte und die zweite Deckplatte der Leichtbauplatte hinein erstreckt. In dieses Sackloch wird dann der Dübel eingesteckt.

Aus der europäischen Offenlegungsschrift EP 3 296 576 A1 ist ein Insert bekannt, das beispielsweise als massives Holzstück oder Kunststoffstück ausgebildet ist. Zum Anordnen des Inserts in der Leichtbauplatte wird in die Schmalseite der Leichtbauplatte ein Sackloch eingebracht, das sich ein Stück weit in die erste Deckplatte und die zweite Deckplatte der Leichtbauplatte erstrecken kann. Das Insert wird dann mittels Weißleim in dem Sackloch verklebt. An dem massiven Insert können dann Schrauben, Beschlagteile oder dergleichen befestigt werden.

Aus der europäischen Offenlegungsschrift EP 3 228 879 A1 ist ein Verbindungsbeschlag für Leichtbauplatten bekannt. Der Verbindungsbeschlag weist ein erstes topfartiges Beschlagteil und ein zweites topfartiges Beschlagteil auf. Die beiden Beschlagteile weisen jeweils eine erste Stirnseite, eine der ersten Stirnseite gegenüberliegende zweite Stirnseite und einen, sich zwischen den Stirnseiten erstreckenden Mantel auf, wobei die Stirnseiten eine Kreisform haben und wobei wenigstens ein an die erste Stirnseite anstoßender Randabschnitt des Mantels mit radial nach außen gerichteten Rippen versehen ist und wobei die zweite Stirnseite wenigstens in ihrem Randbereich mit senkrecht zur Stirnseite abragenden Vorsprüngen versehen ist.

Zwischen den Stirnseiten ist ein Einschubkanal bzw. ein Schraubkanal zum Einstecken bzw. Eindrehen einer Schraube vorgesehen.

Aus der internationalen Offenlegungsschrift WO 2011/042326 A1 ist ein Dübel für eine Leichtbauplatte bekannt. Der Dübel ist hülsenförmig ausgebildet und weist an einer zweiten Stirnseite, die in eine Bohrung in der Leichtbauplatte eingeschoben wird, senkrecht zur Stirnseite abragende Vorsprünge auf. An einem sich an die erste Stirnseite anschließenden Randbereich ist eine umlaufende, radial nach außen abstehende Rippe vorgesehen, die hinter eine Deckplatte der Leichtbauplatte schnappen und dadurch einen Hinterschnitt bereitstellen soll.

Aus der europäischen Offenlegungsschrift EP 3 296 576 A1 ist ein Fügeverfahren für Leichtbauplatten bekannt. In Seitenkanten einer Leichtbauplatte kann ein zylinderförmiger und im Querschnitt ovaler Einsatz eingesetzt werden. Der Einsatz ist so bemessen, dass er mit den gegenüberliegenden Geraden des Ovals an einer jeweiligen Innenseite der Deckplatten der Leichtbauplatte anliegt. Der Einsatz wird in die Leichtbauplatte eingeklebt und besteht aus Holz. In dem Einsatz können dann Bohrungen für Holzdübel angeordnet werden und auf diese Weise können zwei Leichtbauplatten über Eck mittels konventioneller Holzdübel verbunden werden.

Mit der Erfindung sollen ein Adapter und ein Adaptersystem verbessert werden.

Erfindungsgemäß ist hierzu ein Adapter für Platten mit den Merkmalen von Anspruch 1 und ein Adaptersystem mit den Merkmalen von Anspruch 7 vorgesehen. Vorteilhafte Weiterbildungen der Erfindung sind in den Unteransprüchen angegeben.

Der erfindungsgemäße Adapter ist für Platten mit zwei gegenüberliegenden Deckbereichen und einem Kern vorgesehen, wobei die Deckbereiche gegenüber dem Kern mechanisch höher belastbar sind. Solche Platten können beispielsweise sogenannte Leichtbauplatten sein, wobei die Leichtbauplatten eine erste Deckplatte, eine zweite Deckplatte und einen zwischen den Deckplatten angeordneten Kern mit gegenüber den Deckplatten geringerer Dichte aufweisen. Der Kern kann beispielsweise als Wabenkern aus Papier oder Pappe ausgebildet sein. Der Adapter weist eine erste Stirnseite, eine der ersten Stirnseite gegenüberliegende zweite Stirnseite und einen, sich zwischen den Rändern der Stirnseiten erstreckenden Mantel auf. Wenigstens die erste Stirnseite weist eine rechteckartige, quadratartige oder ovale Form auf. Ein an die erste Stirnseite anstoßender Randabschnitt des Mantels ist mit radial nach außen gerichteten Rippen versehen und/oder die zweite Stirnseite ist wenigstens in ihrem Randbereich abschnittsweise mit senkrecht zur Stirnseite abragenden Vorsprüngen versehen.

Durch die rechteckartige, quadratartige oder ovale Form kann der Adapter so in die Platte, insbesondere die Leichtbauplatte, eingebracht werden, dass zwei parallel zueinander angeordnete Seitenflächen des Adapters an einer jeweiligen, dem Kern zugewandten Innenseite der Deckbereiche oder der Deckplatten anliegen. Der Adapter kann dadurch sehr stabil mit der Innenseite der Deckbereiche bzw. Deckplatten verbunden werden und stabilisiert dadurch die Platte bzw. Leichtbauplatte wesentlich. Der erfindungsgemäße Adapter kann sowohl in die Schmalseite einer Platte als auch in die Plattenoberfläche beziehungsweise in den Deckel einer Platte eingebracht werden. In beiden Fällen wird der Adapter so angeordnet, dass er sowohl einen ersten Deckbereich bzw. eine erste Deckplatte sowie einen gegenüberliegenden zweiten Deckbereich bzw. eine zweite Deckplatte kontaktiert und dadurch die Platte bzw. Leichtbauplatte partiell wesentlich stabilisiert. In den Adapter können dann Befestigungselemente eingebracht werden, beispielsweise Schrauben, Bolzen, Dübel, Spreizdübel oder Befestigungsabschnitte von Beschlagteilen. Mittels des Adapters können auftretende Haltekräfte dann großflächig in die Deckplatten und auch in den Kern eingeleitet werden. Der erfindungsgemäße Adapter stellt also ein Verankerungsvolumen zur Verankerung mehrerer Befestigungselemente zur Verfügung, das eine ausreichende Festigkeit sowie eine ausreichende Größe für die Verankerung der Befestigungselemente aufweist. Das Verankerungsvolumen ist dabei vorteilhafterweise so groß ausgebildet, dass auch mehrere Befestigungselemente befestigt werden können. Der erfindungsgemäße Adapter ist dadurch sehr flexibel einsetzbar, da er nach dem Einbau in die Platte bzw. Leichtbauplatte ein Verankerungsvolumen für verschiedenste Anwendungsfälle bildet. Beispielsweise können Nägel in den Adapter geschlagen werden, es können Schrauben direkt in den Adapter geschraubt werden und es können selbstverständlich auch Bohrungen in den Adapter eingebracht werden, die dann zur Aufnahme von Dübeln, Spreizdübeln oder Bolzen oder auch Befestigungsabschnitten von Beschlagteilen dienen. Durch den erfindungsgemäßen Adapter wird aus der Leichtbauplatte partiell, d.h. in dem Bereich des Adapters, ein von der Stabilität her einem Vollmaterial ähnlicher Bereich, der in bekannter Weise für unterschiedlichste Verwendungszwecke eingesetzt werden kann. Wenn die erste Stirnseite eine rechteckartige Form aufweist, kann der Dübel in zwei unterschiedlichen Orientierungen in die Schmalseite einer Platte oder Leichtbauplatte eingesetzt werden. Der erfindungsgemäße Adapter kann dadurch für Platten bzw. Leichtbauplatten mit zwei unterschiedlichen Dicken verwendet werden. Durch die radial nach außen gerichteten Rippen in dem an die erste Stirnseite anstoßenden Randabschnitt des Mantels, die im Übrigen auch über im Wesentlichen die gesamte Fläche des Mantels vorgesehen sein können, und durch die senkrecht zur zweiten Stirnseite abragenden Vorsprünge kann der Adapter besonders sicher und schnell in den Deckbereichen bzw. Deckplatten verankert werden. Beispielsweise können die Vorsprünge und Rippen mittels Ultraschallbeaufschlagung des Adapters aufgeschmolzen werden, so dass eine sehr stabile stoffschlüssige Verbindung zwischen dem Adapter und der Platte entsteht, die auch innerhalb sehr kurzer Zeit belastbar ist. Wenn der Adapter beispielsweise aus Metall gefertigt ist, kann durch Einbringen von Ultraschall beispielsweise auch ein Kunststoffmaterial der Deckbereiche oder Deckplatten aufgeschmolzen werden, so dass dadurch dann eine stoffschlüssige Verbindung entsteht. Der Adapter kann auch mittels Klebstoff eingeklebt werden, wobei auch in diesem Fall die Rippen und die Vorsprünge für eine sichere Verankerung sorgen.

Gemäß der Erfindung ist ein zwischen den Stirnseiten liegendes Innenvolumen des Adapters mit einer Rippenstruktur ausgefüllt oder ist mit einer Hohlkörperstruktur ausgefüllt, wobei das Innenvolumen des Adapters zum Anordnen von Dübeln, Spreizdübeln, Schrauben oder Befestigungsabschnitten von Bauteilen ausgebildet ist.

Zur Befestigung von Dübeln, Spreizdübeln, Schrauben, Befestigungsabschnitten von Bauteilen oder dergleichen ist somit das Innenvolumen des Adapters ausgebildet. Der erfindungsgemäße Adapter kann dadurch flexibel eingesetzt werden, auch dann, wenn beispielsweise mehrere Befestigungsmittel im Innenvolumen des Adapters befestigt werden sollen. Als Dübel werden zylindrische Dübel, insbesondere Holzdübel, zum Verbinden von zwei Bauteilen bezeichnet. In Weiterbildung der Erfindung ist die erste Stirnseite rechteckförmig mit abgerundeten Ecken oder oval ausgebildet.

In Weiterbildung der Erfindung ist der Adapter aus Kunststoff oder Metall gebildet.

Beispielsweise kann der Adapter mittels Spritzguss hergestellt werden.

In Weiterbildung der Erfindung ist der Adapter mittels eines additiven Verfahrens oder eines 3D-Druckverfahrens hergestellt.

Speziell dann, wenn das Innenvolumen des Adapters mit Hinterschnitten oder komplizierten räumlichen Strukturen ausgebildet sein soll, bietet sich die Herstellung mittels additiver Verfahren an.

Eine solche Rippenstruktur ist mittels Kunststoffspritzguss herstellbar und entformbar.

Gemäß einer Alternative der Erfindung ist ein zwischen den Stirnseiten liegendes Innenvolumen des Adapters mit einer Rippenstruktur ausgefüllt und die Rippenstruktur weist im Innenvolumen wenigstens abschnittsweise eine Quadratgitterstruktur auf.

Gemäß einer Alternative der Erfindung ist ein zwischen den Stirnseiten liegendes Innenvolumen des Adapters mit einer Rippenstruktur ausgefüllt und die Rippenstruktur weist im Innenvolumen wenigstens abschnittsweise eine Dreieckgitterstruktur auf.

Gemäß einer Alternative der Erfindung ist ein zwischen den Stirnseiten liegendes Innenvolumen des Adapters mit einer Hohlkörperstruktur ausgefüllt und die Hohlkörperstruktur im Innenvolumen weist wenigstens abschnittsweise tetraederförmige Hohlkörper auf.

Gemäß einer Alternative der Erfindung ist ein zwischen den Stirnseiten liegendes Innenvolumen des Adapters mit einer Hohlkörperstruktur ausgefüllt und die Hohlkörperstruktur im Innenvolumen weist wenigstens abschnittsweise oktaederförmige Hohlkörper auf.

In Weiterbildung der Erfindung verjüngt sich der Adapter in wenigstens einem Abschnitt in einer Richtung von der ersten Stirnseite zur zweiten Stirnseite.

Durch eine wenigstens abschnittsweise Verjüngung des Adapters wird das Einsetzen des Adapters in die Leichtbauplatte erleichtert, da ein Kontakt der Mantelfläche des Adapters mit der Wand des vorher hergestellten Sacklochs erst unmittelbar vor dem Ende des Einschiebens erfolgt. Wird also der Adapter beispielsweise mit Klebstoff eingesetzt, ist kein Verschmieren des Klebstoffs während der Einführbewegung des Adapters in das vorher hergestellte Sackloch zu befürchten.

In Weiterbildung der Erfindung weist der Adapter in einer Schnittebene senkrecht zu der ersten Stirnseite einen trapezförmigen Querschnitt auf.

Im Vergleich zu einem rechteckigen Querschnitt wird durch den diagonalen Konturverlauf die Adhäsionsfläche vergrößert. Mit anderen Worten ist die Wandfläche des Sacklochs, mit der die Mantelfläche des Adapters verbunden wird, dann größer als bei einer zylindrischen Ausführung des Sacklochs und des Adapters. Darüber hinaus wird das Einbringen vereinfacht, da erst dann, wenn die Endposition des Adapters fast erreicht ist, ein vollständiger Kontakt zwischen Adapter und Platte entsteht. Somit lassen sich auch Dübel mit Übermaß in Bezug auf das eingebrachte Sackloch leichter einbringen. Gerade beim Einbringen eines mit Klebstoff benetzten Dübels ist dies vorteilhaft, da der applizierte Klebstoff nicht zusammengeschoben wird, sondern auf seiner Position auf dem Adapter verbleibt.

Gemäß der Erfindung ist auch ein Adaptersystem mit mehreren erfindungsgemäßen Adaptern vorgesehen, wobei wenigstens die erste Stirnseite der Adapter eine rechteckartige Form aufweist, wobei sich die Längs- und Querabmessungen der ersten Stirnseiten zwischen den mehreren Adaptern unterscheiden und auf unterschiedliche Abstände von Deckplatten von Leichtbauplatten abgestimmt sind.

Durch die rechteckartige Form kann jeder Adapter für zwei unterschiedlich dicke Leichtbauplatten verwendet werden, abhängig davon, in welcher Orientierung der Adapter in die Schmalseiten der Leichtbauplatte eingesetzt wird. Das erfindungsgemäße Adaptersystem weist mehrere Adapter mit unterschiedlichen Längs- und Querabmessungen auf. Da jeder Adapter für zwei Leichtbauplatten mit unterschiedlicher Dicke eingesetzt werden kann, werden für Leichtbauplatten mit n verschiedenen Dicken infolgedessen lediglich n/2 unterschiedliche Adapter benötigt.

In Weiterbildung der Erfindung weisen Adapter mit unterschiedlichen Abmessungen unterschiedliche Markierungen, beispielsweise unterschiedliche Farben oder unterschiedliche Farbmarkierungen, auf.

Zum Befestigen eines erfindungsgemäßen Adapters in einer Leichtbauplatte sind folgende Schritten vorgesehen: Herstellen eines Sacklochs in der Leichtbauplatte ausgehend von einer Schmalseite oder einer Plattenoberfläche der Leichtbauplatte, Einsetzen des Adapters in das Sackloch und Beaufschlagen des Adapters mit Ultraschall, so dass die radial nach außen gerichteten Rippen des an die erste Stirnseite anstoßenden Randabschnitts des Mantels und gegebenenfalls die von der zweiten Stirnseite wenigstens in ihrem Randbereich senkrecht zur zweiten Stirnseite abragenden Vorsprünge wenigstens teilweise in Kontakt mit den Deckplatten der Leichtbauplatte gelangen, erhitzt werden, aufschmelzen und eine stoffschlüssige Verbindung zwischen dem Adapter und den Deckplatten ausbilden.

Der erfindungsgemäße Adapter kann dadurch sehr schnell und insbesondere ohne die Trocknungszeit eines Klebstoffs abwarten zu müssen in einer Leichtbauplatte befestigt werden. Die Längs- und Querabmessungen des Adapters sind dabei auf die Dicke der Leichtbauplatte abgestimmt. Auch die Tiefe des Adapters, also der Abstand zwischen den beiden Stirnseiten des Adapters, ist auf die Dicke der Leichtbauplatte abgestimmt, so dass der Adapter auch in eine Plattenoberfläche der Leichtbauplatte eingebracht werden kann.

Das Sackloch kann sich dann, wenn es in einer Schmalseite der Leichtbauplatte hergestellt wird, zwischen den beiden Deckplatten erstrecken und auf der, dem Kern zugewandten Innenseite wenigstens einer der Deckplatten eine Vertiefung in der Deckplatte bilden.

Auf diese Weise kann neben einer stoffschlüssigen Verbindung von Deckplatte und Adapter zusätzlich eine formschlüssige Verbindung erzielt werden. Dies trägt zu einer sehr zuverlässigen Fixierung des Adapters in der Leichtbauplatte bei.

Das Sackloch kann sich dann, wenn es ausgehend von einer Plattenoberfläche der Leichtbauplatte hergestellt wird, durch die erste Deckplatte und den Kern hindurch und wenigstens bis zu der, dem Kern zugewandten Innenseite der zweiten Deckplatte erstrecken.

Auch dann, wenn das Sackloch ausgehend von einer Plattenoberfläche der Leichtbauplatte hergestellt wird, erstreckt sich das Sackloch vorteilhafterweise so in die den Grund des Sacklochs bildende Deckplatte, dass in dieser Deckplatte eine Vertiefung gebildet wird. Dadurch kann neben einem Stoffschluss ein zusätzlicher Formschluss zwischen dem Adapter und dieser Deckplatte erzielt werden.

Die Verwendung eines erfindungsgemäßen Adapters zum Befestigen von Schrauben, Spreizdübeln, Dübeln, Beschlägen und dergleichen erfolgt an Platten mit zwei gegenüberliegenden Deckbereichen und einem Kern, wobei die Deckbereiche gegenüber dem Kern mechanisch höher belastbar sind.

Die Platte ist als Leichtbauplatte mit einer ersten Deckplatte, einer zweiten Deckplatte und einem zwischen den Deckplatten angeordneten Kern mit gegenüber den Deckplatten geringerer Dichte, insbesondere einem Wabenkern, ausgebildet.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten Ausführungsformen können dabei in beliebiger Weise miteinander kombiniert werden, ohne den Rahmen der Erfindung zu überschreiten. Dies gilt auch dann, wenn Einzelmerkmale ohne weitere Einzelmerkmale, mit denen sie im Zusammenhang beschrieben sind, kombiniert werden. In den Zeichnungen zeigen:
- Fig. 1: eine Ansicht eines erfindungsgemäßen Adapters gemäß einer ersten Ausführungsform von schräg oben,
- Fig. 2: eine Draufsicht auf den Adapter der Fig. 1,
- Fig. 3: eine Seitenansicht des Adapters der Fig. 1,
- Fig. 4: eine abschnittsweise Darstellung einer Leichtbauplatte, wobei mögliche Positionen zur Anordnung des erfindungsgemäßen Adapters angedeutet sind,
- Fig. 5: eine schematische, geschnittene Seitenansicht einer Leichtbauplatte mit einem von der Schmalseite der Leichtbauplatte her eingebrachten Sackloch,
- Fig. 6: eine Vorderansicht der Leichtbauplatte der Fig. 5,
- Fig. 7: die Leichtbauplatte der Fig. 5 mit einem teilweise in das Sackloch eingeschobenen erfindungsgemäßen Adapter,
- Fig. 8: die Darstellung der Fig. 7 in einer Vorderansicht,
- Fig. 9: eine schematische Darstellung beim Beaufschlagen des Adapters mit Ultraschall bei gleichzeitigem Eindrücken des Adapters in das Sackloch,
- Fig. 10: den vollständig in das Sackloch eingeschobenen Adapter,
- Fig. 11: den vollständig in das Sackloch der Leichtbauplatte eingeschobenen und dort stoffschlüssig verankerten Adapter,
- Fig. 12: eine Vorderansicht des Adapters und der Leichtbauplatte der Fig. 11,
- Fig. 13: eine der Fig. 11 entsprechende Seitenansicht, wobei mögliche Einschraubrichtungen in das Innenvolumen des Adapters angedeutet sind,
- Fig. 14: eine der Fig. 12 entsprechende Ansicht, wobei mögliche Einschraubrichtungen in das Innenvolumen des Adapters angedeutet sind,
- Fig. 15: eine schematische Schnittansicht einer Leichtbauplatte, wobei ein erfindungsgemäßer Adapter von einer in Fig. 15 oberen Plattenoberfläche her in die Leichtbauplatte eingebracht wurde,
- Fig. 16: eine Draufsicht auf die Leichtbauplatte der Fig. 15,
- Fig. 17: eine abschnittsweise, schematische Darstellung einer Quadratgitterstruktur im Innenvolumen eines erfindungsgemäßen Adapters,
- Fig. 18: eine abschnittsweise, schematische Darstellung einer Dreieckgitterstruktur im Innenvolumen eines erfindungsgemäßen Adapters,
- Fig. 19: eine abschnittsweise, schematische Draufsicht auf eine Tetraederstruktur im Innenvolumen eines erfindungsgemäßen Adapters,
- Fig. 20: eine schematische, abschnittsweise räumliche Darstellung einer Tetraederstruktur im Innenvolumen eines erfindungsgemäßen Adapters,
- Fig. 21: einen Tetraeder zur Anordnung im Innenvolumen eines erfindungsgemäßen Adapters,
- Fig. 22: einen Oktaeder zur Anordnung im Innenvolumen eines erfindungsgemäßen Adapters,
- Fig. 23: eine Draufsicht auf einen erfindungsgemäßen Adapter gemäß einer weiteren Ausführungsform,
- Fig. 24: eine schematische Darstellung eines erfindungsgemäßen Adapters und eine Tabelle zur Verdeutlichung der Abstimmung der Abmessungen des erfindungsgemäßen Adapters auf unterschiedliche Stärken von Platten,
- Fig. 25: eine Darstellung von zwei Leichtbauplatten, die jeweils mit einem erfindungsgemäßen Adapter gemäß Fig. 23 versehen sind und mit einem Dübel miteinander verbunden werden sollen,
- Fig. 26: die Anordnung der Fig. 25, wobei der Dübel in einen der Adapter eingesteckt ist und eine der Leichtbauplatten geschnitten dargestellt ist,
- Fig. 27: die Anordnung der Fig. 25 im verbundenen Zustand und
- Fig. 28: eine abschnittsweise, geschnittene Darstellung der Anordnung der Fig. 27.

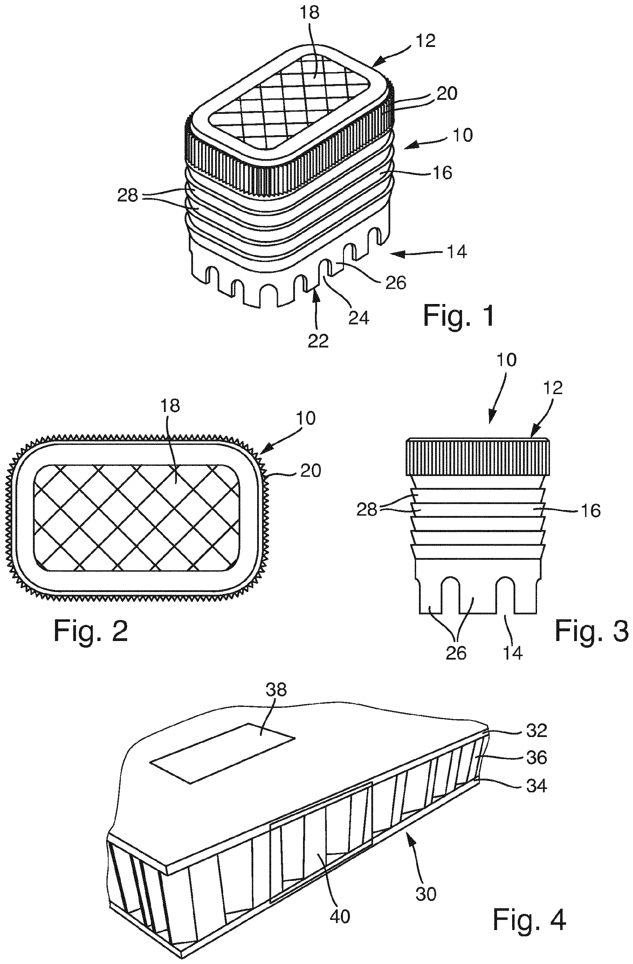

Fig. 1 zeigt einen erfindungsgemäßen Adapter 10, der beispielsweise aus Kunststoff oder Metall ausgebildet sein kann. Der Adapter besteht beispielsweise aus ABS-Kunststoff, also einem thermoplastischen Kunststoff. Es ist im Rahmen der Erfindung auch möglich, den Adapter aus duroplastischem Kunststoff oder auch aus Metall auszubilden. Die Ausbildung des Adapters 10 aus thermoplastischem Kunststoff ermöglicht in besonders einfacher Weise das Fixieren des Adapters 10 in einer Platte oder Leichtbauplatte mittels Ultraschallbeaufschlagung, wie nachstehend noch erläutert wird. Ist der Adapter 10 aus Metall oder duroplastischem Kunststoff ausgebildet, ist eine Fixierung mittels Ultraschallbeaufschlagung in Kunststoffplatten theoretisch möglich, zweckmäßig ist in der Regel dann aber eine Fixierung des Adapters mittels Klebstoff.

Der Adapter 10 weist eine erste Stirnseite 12 und eine zweite, der ersten Stirnseite 12 gegenüberliegende Stirnseite 14 auf. Zwischen den beiden Stirnseiten 12, 14 erstreckt sich ein Mantel 16. Zwischen der ersten Stirnseite 12 und der zweiten Stirnseite 14 ist ein Innenvolumen 18 des Adapters 10 angeordnet. Bei der dargestellten Ausführungsform ist der Adapter 10 mit einer Rippenstruktur im Innenvolumen 18 versehen, wobei die Rippenstruktur in Längsrichtung des Adapters, also von der ersten Stirnseite 12 zu der zweiten Stirnseite 14 durchgehende zylindrische Kanäle mit quadratischem Querschnitt bildet. Lediglich in den Randbereichen, in denen die Gitterstruktur an dem Mantel 16 des Adapters 10 anstößt, sind die gebildeten Kanäle nicht mehr quadratisch im Querschnitt.

Das Innenvolumen 18 ist zur Anordnung von Befestigungsmitteln vorgesehen, beispielsweise Dübeln, Schrauben, Spreizdübeln, Bolzen oder auch Befestigungsabschnitten von Beschlagteilen. Nach dem Einbringen des Adapters 10 in eine Leichtbauplatte stellt der Adapter 10 im Bereich seines Innenvolumens 18 ein mechanisch hochbelastbares Befestigungsvolumen für Befestigungsmittel zur Verfügung. Über den Mantel 16 werden Haltekräfte großflächig in die Deckbereiche bzw. Deckplatten von Platten sowie auch in deren Kern eingeleitet.

Die erste Stirnseite 12 weist eine rechteckartige Form mit abgerundeten Ecken auf. Auch die zweite Stirnseite 14 weist eine reckteckartige Form mit abgerundeten Ecken auf. Die erste Stirnseite 12 und die zweite Stirnseite 14 sind gleich groß, so dass der Adapter 10 eine annähernd zylindrische Grundform hat.

Im Rahmen der Erfindung ist es auch möglich, dass sich der Adapter in einer Richtung von der ersten Stirnseite 12 zur zweiten Stirnseite 14 verjüngt und dann beispielsweise in einer Schnittebene senkrecht zur ersten Stirnseite des Adapters 10 einen trapezförmigen Querschnitt aufweist. Ein Randabschnitt des Mantels 16, der an die erste Stirnseite 12 anstößt, ist mit radial nach außen gerichteten Rippen 20 versehen. Diese Rippen 20 verlaufen parallel zur Längsrichtung des Adapters 10. Die Rippen 20 sind über den gesamten Umfang des Adapters 10 angeordnet. Die Länge der Rippen 20 entspricht im Wesentlichen der Dicke einer Deckplatte einer Leichtbauplatte, für die der Adapter 10 vorgesehen ist.

Im Bereich der zweiten Stirnseite 14 ist ein in Längsrichtung und von der ersten Stirnseite 12 weg abragender Kragen 22 vorgesehen, der mit gleichmäßig beabstandeten Ausnehmungen 24 versehen ist. Dadurch werden vom Rand der zweiten Stirnseite 14 abragende Vorsprünge 26 gebildet. Bei der dargestellten Ausführungsform bilden die Vorsprünge 26 eine Verlängerung des Mantels 16. Die Vorsprünge 26 sind dafür vorgesehen, eine Verankerung an der Innenseite einer Deckplatte einer Leichtbauplatte, die dem Kern der Leichtbauplatte zugewandt ist, sicherzustellen
Der Mantel 16 ist mit mehreren um den Umfang des Adapters 10 umlaufenden sägezahnartigen Vorsprüngen 28 versehen. Die sägezahnartigen Vorsprünge 28 sind dabei so ausgebildet, dass der Adapter 10 parallel zu seiner Längsrichtung, also von der ersten Stirnseite 12 in Richtung auf die zweite Stirnseite 14 in ein Sackloch einer Leichtbauplatte eingeschoben werden kann. In der umgekehrten Richtung, also von der zweiten Stirnseite 14 in Richtung auf die erste Stirnseite 12, verhaken sich die sägezahnartigen Vorsprünge 28 dann aber am Kern der Leichtbauplatte oder an den Innenseiten der Deckplatten der Leichtbauplatte und verhindern dadurch ein Herausziehen des Adapters 10 aus dem Sackloch in der Leichtbauplatte.

Besteht, wie bei der dargestellten Ausführungsform, der Adapter 10 aus thermoplastischem Kunststoff, beispielsweise ABS-Kunststoff, können mittels einer Ultraschallbeaufschlagung die Rippen 20, die sägezahnartigen Vorsprünge 28 und die Vorsprünge 26 wenigstens abschnittsweise durch die Reibung zwischen dem Material der Deckplatten und gegebenenfalls dem Kern der Leichtbauplatte so stark erhitzt werden, dass sie aufschmelzen und dann eine stoffschlüssige Verbindung mit den Deckplatten bzw. dem Kern bilden. Besteht der Kern der Leichtbauplatte aus Papierwaben, führt eine Ultraschallbeaufschlagung nicht zu einem Aufschmelzen der mit dem Kern in Kontakt tretenden sägezahnartigen Vorsprünge 28. Aufgrund der geringen mechanischen Belastbarkeit des Kerns ist eine solche Verbindung auch nicht erforderlich.

Fig. 2 zeigt eine Draufsicht auf den Adapter 10 der Fig. 1. Gut zu erkennen ist das Innenvolumen 18 mit der Quadratgitterstruktur sowie die Rippen 20.

Fig. 3 zeigt eine Seitenansicht des Adapters 10 der Fig. 1. In dieser Ansicht ist die erste Stirnseite 12, die zweite Stirnseite 14 und die Mantelfläche 16 mit den sägezahnartigen umlaufenden Vorsprüngen 28 zu erkennen. Ebenfalls zu erkennen sind die von der zweiten Stirnseite 14 ausgehenden Vorsprünge 26, die bei der dargestellten Ausführungsform eine Verlängerung der Mantelfläche 16 bilden.

Fig. 4 zeigt eine abschnittsweise schematische Darstellung einer Leichtbauplatte 30, die eine erste Deckplatte 32, eine zweite Deckplatte 34 und einen zwischen den beiden Deckplatten 32, 34 angeordneten wabenartigen Kern 36 aufweist. Die beiden Deckplatten 32, 34 können beispielsweise aus einem Holzwerkstoff bestehen, beispielsweise als Spanplatte ausgebildet sein. Der Kern 36 besteht bei der dargestellten Ausführungsform aus Papierwaben.

In Fig. 4 angedeutet sind zwei mögliche Positionen 38, 40 für die Anordnung von Sacklöchern in der Leichtbauplatte 30, wobei in diesen Sacklöchern an den Positionen 38, 40 dann der erfindungsgemäße Adapter 10 angeordnet werden kann.

In der Position 38 geht das Sackloch von der Plattenoberfläche der oberen Deckplatte 32 aus. Das Sackloch erstreckt sich in diesem Fall durch die obere Deckplatte 32 und den Kern 36 hindurch bis wenigstens zur Innenseite der unteren Deckplatte 34. Von der Innenseite der unteren Deckplatte 34 ausgehend kann das Sackloch noch eine Vertiefung in der unteren Deckplatte 34 bilden.

Der Adapter 10 kann auch in die Schmalseite der Leichtbauplatte 30 eingebracht werden. in einem solchen Fall würde das Sackloch dann an der Position 40 angeordnet werden. Das Sackloch ist dann dabei so ausgebildet, dass es sich ein Stück weit in die obere Deckplatte 32 und auch ein Stück weit in die untere Deckplatte 34 hinein erstreckt. Sowohl in der oberen Deckplatte 32 als auch in der unteren Deckplatte 34 wird dadurch dann eine flache Vertiefung ausgebildet, in der der Adapter 10 dann verankert werden kann.

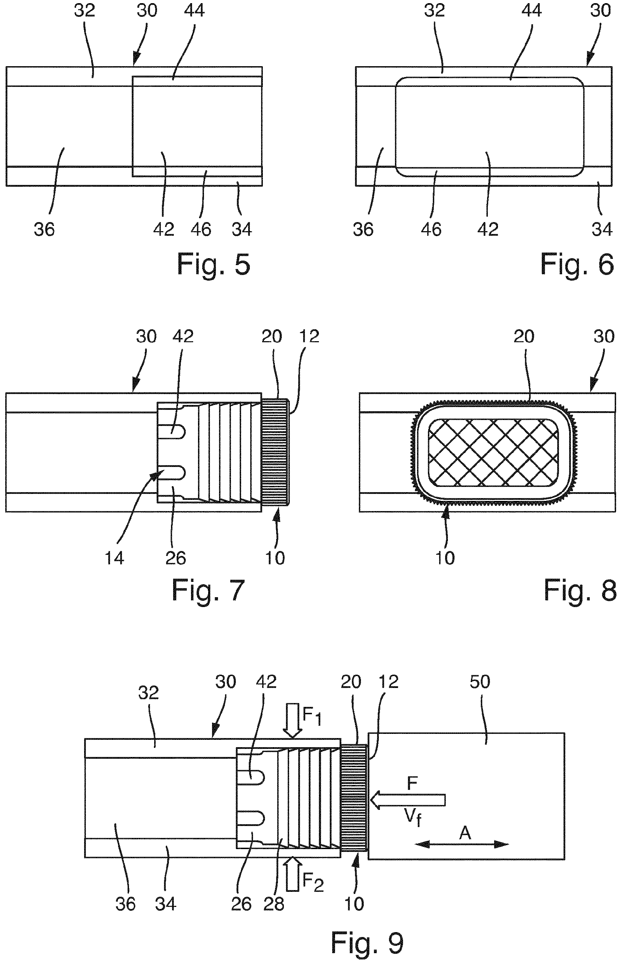

Fig. 5 zeigt eine abschnittsweise Seitenansicht der Leichtbauplatte 30, wobei ein Sackloch 42 in die Schmalseite der Leichtbauplatte 30 eingebracht wurde, entsprechend der Position 40 in Fig. 4.

Wie zu erkennen ist, erstreckt sich das Sackloch 42 ein Stück weit in die obere Deckschicht 32 und auch ein Stück weit in die untere Deckschicht 34 hinein. Der volumenmäßig größte Anteil des Sacklochs 42 liegt im Kern 36. Von der Innenseite der oberen Deckschicht 32 ausgehend ist dadurch eine Vertiefung 44 gebildet, die etwa die halbe Dicke der Deckschicht 32 einnimmt. Von der Innenseite der unteren Deckschicht 34 ausgehend ist ebenfalls eine Vertiefung 46 gebildet, die sich etwa über die halbe Dicke der Deckschicht 34 erstreckt.

Fig. 6 zeigt eine Vorderansicht der Leichtbauplatte 30 mit dem Sackloch 42. Auch in dieser Ansicht ist die Vertiefung 44 in der oberen Deckplatte 32 und die Vertiefung 46 in der unteren Deckplatte 34 gut zu erkennen. Der Umriss des Sacklochs 42 in der Draufsicht der Fig. 6 ist rechteckförmig mit abgerundeten Ecken und entspricht in seiner Größe dem Querschnitt des Adapters 10 ohne die Rippen 20.

Gemäß Fig. 7 wird nun in das Sackloch 42 von der Schmalseite der Leichtbauplatte 30 her der Adapter 10 so weit eingeschoben, bis das in Fig. 7 linke Ende der Rippen 20, das der ersten Stirnseite 12 abgewandt ist, an den Rändern des Sacklochs 42 anliegt. In diesem Zustand wird eine weitere Einführbewegung des Adapters 10 in das Sackloch 42 zunächst gestoppt. Dies liegt zum einen daran, dass die unteren Enden der Rippen 20 auf der Schmalseite der Leichtbauplatte 30 aufliegen und zum anderen daran, dass die Vorsprünge 26 im Bereich der zweiten Stirnseite 14 des Adapters 10 am Grund des Sacklochs 42 anliegen.

Der Zustand der Fig. 7 ist in Fig. 8 in einer Draufsicht dargestellt. Es ist gut zu erkennen, dass die Rippen 20 des Adapters 10 über den Rand des Sacklochs 42, das in Fig. 8 vollständig vom Adapter 10 verdeckt ist, hinausragen.

Um nun den Adapter 10 in dem Sackloch 42 der Leichtbauplatte 30 zu fixieren, wird der Adapter 10 an seiner ersten Stirnseite 12 mit einer in Richtung auf die Leichtbauplatte 30 und somit den Grund des Sacklochs 42 zu wirkenden Kraft F beaufschlagt. Gleichzeitig wird auf die Plattenoberfläche der ersten Deckplatte 32 mit einer Kraft F₁ gedrückt und auf die Plattenoberfläche der zweiten Deckplatte 34 wird ebenfalls mit einer Kraft F₂ gedrückt. Die Kräfte F₁, F₂ auf die Deckplatten 32 bzw. 34 sollen verhindern, dass die Deckplatten 32, 34 beim Eindrücken des Adapters 10 nach oben bzw. unten ausweichen.

Die Kraft F auf den Adapter 10 wird mittels einer Ultraschallsonotrode 50 aufgebracht, die in der Fig. 9 nach links in Richtung auf die Leichtbauplatte 30 zu und auch wieder von der Leichtbauplatte 30 weg bewegt werden kann. Die Ultraschallsonotrode 50 wird mit einer Geschwindigkeit V_{f} in Richtung auf die Leichtbauplatte 30 zubewegt und drückt infolgedessen mit dieser Geschwindigkeit den Adapter 10 in das Sackloch 42. Die Ultraschallsonotrode beaufschlagt den Adapter 10 mit Ultraschallschwingungen.

Dies führt an allen Punkten, an denen der Adapter 10 an der Leichtbauplatte 30 anliegt, zu einer erheblichen Wärmeentwicklung. Diese Wärmeentwicklung ist so stark, dass beim Eindrücken des Adapters 10 in das Sackloch 42 die Vorsprünge 26 im Bereich der zweiten Stirnseite 14 aufschmelzen, zu einer kompakte Massen zusammengedrückt werden und dadurch im Bereich der zweiten Stirnseite 14 eine stoffschlüssige Verbindung mit der Leichtbauplatte 30 ausbilden.

In gleicher Weise werden die Vorsprünge 28 am Mantel des Adapters 10 dort, wo sie in den Vertiefungen 44 bzw. 46 der oberen Deckplatte 32 bzw. der unteren Deckplatte 34 anliegen, stark erhitzt und schmelzen ebenfalls auf. Auch im Bereich der Vertiefungen 44, 46 bildet sich somit eine stoffschlüssige Verbindung des Adapters 10 mit der oberen Deckplatte 32 bzw. der unteren Deckplatte 34 aus.

In den Bereichen, in denen die Vorsprünge 28 lediglich den Kern 36 berühren, tritt bei einem Kern 36 aus Papierwaben, vgl. Fig. 4, in der Regel keine stoffschlüssige Verbindung auf. Denn die Reibungskräfte zwischen den Vorsprüngen 28 und den Papierwaben des Kerns 36 sind nicht hoch genug, um eine genügend starke Erwärmung des Materials des Adapters 10 in diesen Bereichen zu bewirken.

Beim Eindrücken des Adapters 10 gelangen aber die Rippen 20 an dem in Fig. 9 rechten Ecke des Adapters 10 in Kontakt mit der Vertiefung 44 in der oberen Deckplatte 32 bzw. in Kontakt mit der Vertiefung 46 in der unteren Deckplatte 34. In diesen Kontaktbereichen werden die Rippen 20 durch die Ultraschallenergie von der Ultraschallsonotrode 50 so stark erwärmt, dass sie aufschmelzen. Der Adapter 10 kann dadurch nicht nur vollständig in das Sackloch 42 eingeschoben werden, sondern die Rippen 20 bilden auch nach dem Erkalten eine stoffschlüssige Verbindung mit der oberen Deckplatte 32 bzw. der unteren Deckplatte 34 aus. In den Bereichen, vgl. Fig. 8, in denen die Rippen 20 lediglich den Kern 36 berühren, ist die Erwärmung der Rippen 20 in der Regel nicht genügend groß, um die Rippen 20 aufzuschmelzen. Dies gilt für einen Kern 36 aus Papierwaben. Bei Kernen aus anderen, stabileren Materialien kann aber auch im Kontaktbereich zwischen dem Adapter 10 und dem Kern 36 ein Aufschmelzen des Materials des Adapters 10 und dadurch eine stoffschlüssige Verbindung zwischen Adapter 10 und Leichtbauplatte 30 erfolgen.

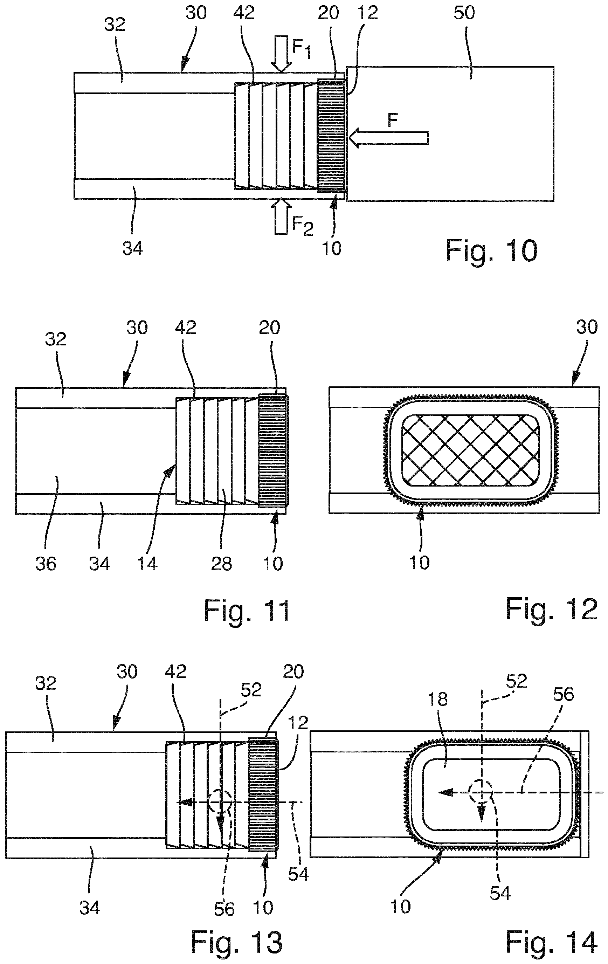

Den vollständig eingeschobenen Zustand des Adapters 10, der das Sackloch 42 nun vollständig ausfüllt, zeigt Fig. 10. Die Ultraschallsonotrode 50 liegt nun auf der Schmalseite der Leichtbauplatte 30 auf. Die Vorsprünge 26, vgl. Fig. 9, sind vollständig aufgeschmolzen und daher nicht mehr zu erkennen. Die Rippen 20 sind in der Darstellung der Fig. 10 noch zu erkennen, in den Kontaktbereichen zwischen der ersten Deckplatte 32 und dem Adapter 10 sowie in den Kontaktbereichen zwischen der zweiten Deckplatte 34 und dem Adapter 10 sind aber auch die Rippen 20, wie beschrieben wurde, aufgeschmolzen. Bis der Adapter 10 vollständig eingeschoben ist und das thermoplastische Kunststoffmaterial das Adapters 10 wieder vollständig erstarrt ist, werden die Kraft F₁ auf die erste Deckplatte 32 und die Kraft F₂ auf die zweite Deckplatte 34 sowie auch die Kraft F, mit der die Ultraschallsonotrode 50 auf die erste Stirnseite 12 des Adapters 10 drückt, aufrechterhalten. Das Einbringen von Ultraschallenergie wird in diesem Zustand aber bereits abgeschaltet. Während dieser sogenannten Haltezeit kann das thermoplastische Material des Adapters 10 in den Kontaktbereichen mit der Leichtbauplatte 30 erstarren und eine stoffschlüssige Verbindung zwischen Adapter 10 und Leichtbauplatte 30 kann sich ausbilden.

Dieser Zustand ist in Fig. 11 und Fig. 12 dargestellt. Es ist zu erkennen, dass der Adapter 10 stoffschlüssig und formschlüssig in der Leichtbauplatte 30 gehalten ist. Im Bereich der zweiten Stirnseite 14 liegt zwischen dem Adapter 10 und der Leichtbauplatte 30 zum einen ein Stoffschluss zwischen dem Adapter 10 und der Leichtbauplatte 30 vor, da die Vorsprünge 26 des Adapters 10 aufgeschmolzen und wieder erstarrt sind. Zum anderen liegt im Bereich der zweiten Stirnseite 14 ein Formschluss zwischen dem Adapter 10 und der Leichtbauplatte 30 vor, da der Adapter 10 in Fig. 11 nicht weiter nach links, also über den Grund des Sacklochs 42 hinausgeschoben werden kann. Darüber hinaus kann der Adapter 10 in Fig. 11 auch nicht nach oben oder unten ausweichen, da er dort durch die erste Deckplatte 32 bzw. die zweite Deckplatte 34 gehalten ist.

In den Bereichen, in denen der Adapter 10 in Kontakt mit der oberen Deckplatte 32 bzw. der unteren Deckplatte 34 ist, bildet sich zwischen dem Mantel des Adapters 10 und dem Material der ersten Deckplatte 32 bzw. der zweiten Deckplatte 34 auch ein Stoffschluss aus, da auch dort die sägezahnförmigen Vorsprünge 28 des Mantels wenigstens teilweise aufgeschmolzen und wieder erstarrt sind. Ein Formschluss wird auch durch die Sägezahnform der Vorsprünge 28 erzielt, die sich beispielsweise auch am Kern 36 abstützen und ein Herausziehen des Adapters 10 in Fig. 11 in der Richtung nach rechts verhindern. Auch zwischen den Rippen 20 und der oberen Deckplatte 32 bzw. der unteren Deckplatte 34 hat sich im Zustand der Fig. 11 ein Stoffschluss ausgebildet. Auch ein Formschluss liegt in diesem Bereich vor, da der Adapter 10 in der Ansicht der Fig. 11 weder nach oben noch nach unten ausweichen kann. Dort, wo die Rippen 20 den Kern 36 berühren, können die Rippen 20 ebenfalls eine, wenn auch vergleichsweise geringe, Haltekraft übertragen.

Fig. 12 zeigt schematisch eine Draufsicht auf den Adapter 10, der nun vollständig in dem Sackloch 42 der Leichtbauplatte 30 aufgenommen ist.

Die Darstellung der Fig. 13 entspricht im Wesentlichen der Darstellung der Fig. 11 und zeigt den Adapter 10 im vollständig eingeschobenen und formschlüssig sowie stoffschlüssig verankerten Zustand im Sackloch 42 der Leichtbauplatte 30. Mit gestrichelten Linien 52 bzw. 54 und einem gestrichelten Kreis 56 sind mögliche Einschraubrichtungen bzw. Einsetzrichtungen von Befestigungsmitteln angedeutet. Der Adapter 10 stellt ein Befestigungsvolumen oder Verankerungsvolumen mit wesentlich erhöhter Festigkeit in der Leichtbauplatte 30 zur Verfügung. In dieses Befestigungsvolumen mit wesentlich erhöhter Festigkeit können beispielsweise Schrauben gemäß dem Pfeil 52 von oben, also durch die erste Deckplatte 32 hindurch, von unten, also durch die zweite Deckplatte 34 hindurch, oder von der Seite her, also in den Kreis 56 hinein, eingeschraubt werden. Auch von der Seite der ersten Stirnseite 12 her können Schrauben gemäß dem Pfeil 54 in das Befestigungsvolumen des Adapters 10 eingeschraubt werden.

Die Darstellung der Fig. 14 zeigt eine Draufsicht der in Fig. 13 dargestellten Situation. Der Pfeil 54 ist nun als gestrichelter Kreis dargestellt, wohingegen der in Fig. 13 gestrichelt dargestellte Kreis 56 nun als Pfeil 56 erscheint. Es ist anhand der Darstellung der Fig. 14 zu erkennen, dass beispielsweise auch mehrere Schrauben nebeneinander oder auch großvolumige Befestigungsabschnitte von Beschlagteilen in dem durch den Adapter 10 gebildeten Befestigungsvolumen angeordnet werden können.

Im Rahmen der Erfindung kann der Adapter 10 auch so ausgebildet sein, dass auch die Rippen 28, siehe Fig. 1, im Übermaß gefertigt sind und damit vor dem vollständigen Einsetzen des Adapters 10 in das angefertigte Sackloch 42 ähnlich wie die Rippen 20 über den Umfang des Sacklochs 42 herausstehen. Beim Eindrücken des Adapters 10 in das Sackloch 42 wird, vgl. Fig. 9, der Adapter mit der Ultraschallsonotrode 50 mit Ultraschall beaufschlagt. Schon während des Einführens schmelzen dadurch die im Übermaß gefertigten Rippen 28 auf, so dass sich der Adapter 10 dann in das Sackloch 42 eindrücken lässt. Das Aufschmelzen der Rippen 28 führt dann ebenfalls zu einer stoffschlüssigen Verbindung des Adapters 10 mit der Innenseite der oberen Deckplatte 32, mit der Innenseite der unteren Deckplatte 34 sowie mit dem Kern 36.

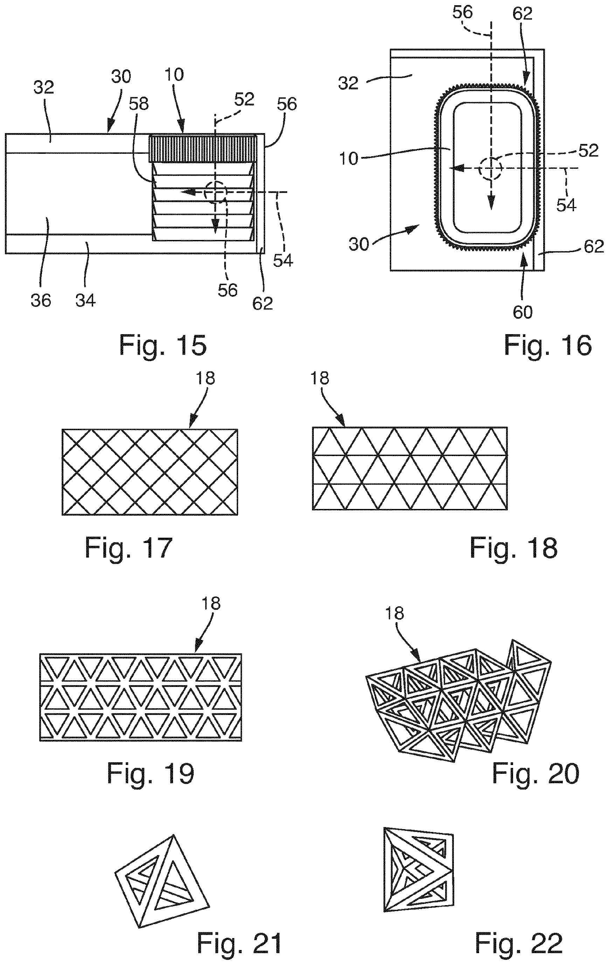

Die Darstellung der Fig. 15 zeigt die Leichtbauplatte 30 mit dem vollständig eingesetzten und verankerten Adapter 10, wobei im Unterschied zu den Darstellungen der Fig. 5 bis 14 der Adapter 10 in ein Sackloch in der Leichtbauplatte 30 eingedrückt wurde, das von der Plattenoberfläche der ersten Deckplatte 32 her eingebracht wurde. Dies entspricht etwa der Position 38 des Sacklochs in Fig. 4. Im Unterschied zur Position 38 des Sacklochs in Fig. 4 ist das Sackloch im Zustand der Fig. 15 und der Fig. 16 aber so in der Leichtbauplatte angeordnet, dass es sich bis zur Schmalseite der Leichtbauplatte 30 erstreckt. Im fertiggestellten Zustand der Leichtbauplatte ist in Fig. 15 und Fig. 16 noch ein Umleimer 62 auf die Schmalseite der Leichtbauplatte 30 aufgesetzt worden.

Es ist in Fig. 15 gut zu erkennen, dass sich das Sackloch 58 durch die erste Deckplatte 32 hindurch, durch den Kern 36 hindurch und ein Stück weit in die zweite Deckplatte 34 hinein erstreckt. Von der Innenseite der zweiten Deckplatte 34 ausgehend ist in der zweiten Deckplatte 34 dadurch eine Vertiefung ausgebildet, in der der Adapter 10 im vollständig montierten Zustand nicht nur stoffschlüssig, sondern zusätzlich auch formschlüssig gehalten ist.

Mögliche Einschraubrichtungen in das durch den Adapter 10 gebildete Befestigungsvolumen sind in Fig. 15 und Fig. 16 wieder durch gestrichelte Pfeile bzw. Kreise angedeutet.

Der Darstellung der Fig. 16 ist zu entnehmen, dass durch die abgerundeten Ecken des Adapters 10 und die entsprechende Ausformung des Sacklochs in den Bereichen 60 und 62 der in Fig. 16 sichtbaren ersten Deckplatte 32, aber auch entsprechend im Bereich der zweiten Deckplatte 34 ein zusätzlicher Formschluss zwischen den Deckplatten 32, 34 und dem Adapter 10 gebildet wird. Dieser Formschluss in den Bereichen 60, 62 verhindert, dass der Adapter 10 sich aus der Leichtbauplatte heraus, in Fig. 16 also nach rechts, bewegen kann.

Fig. 17 zeigt abschnittsweise und schematisch eine Rippenstruktur im Innenvolumen 18 des erfindungsgemäßen Adapters, die als Quadratgitterstruktur ausgebildet ist, entsprechend der Ausführungsform der Fig. 1 bis 3.

Fig. 18 zeigt schematisch und abschnittsweise eine Dreieckgitterstruktur, die alternativ im Innenvolumen 18 des Adapters 10 angeordnet werden kann. Sowohl die Quadratgitterstruktur der Fig. 17 als auch die Dreieckgitterstruktur der Fig. 18 bilden in Längsrichtung des Adapters 10, also von der ersten Stirnseite 12 bis zur zweiten Stirnseite 14, durchgehende zylindrische Kanäle, in denen beispielsweise Bolzen, Schrauben, Dübel oder dergleichen angeordnet werden können. Unabhängig von der Ausrichtung dieser Kanäle ist, vgl. die Fig. 13, 14, 15 und 16, auch das Einbringen von Befestigungsmitteln quer zur Längsrichtung oder auch schräg hierzu ohne weiteres möglich.

Fig. 19 zeigt beispielhaft und abschnittsweise eine Tetraederstruktur, die im Innenvolumen 18 des Adapters 10 angeordnet werden kann. Ein einzelner Tetraeder ist in Fig. 21 dargestellt, mehrere, miteinander verbundene Tetraeder sind schematisch in Fig. 19 und Fig. 20 dargestellt. Eine solche Tetraederstruktur im Innenvolumen 18 des Adapters 10 erlaubt es, dass Auszugskräfte von Schrauben in dem Adapter im Wesentlichen richtungsunabhängig sind. Der Adapter 10 wird in einem solchen Fall vorteilhafterweise mittels additiver Verfahren oder 3-D-Druck hergestellt.

Fig. 22 zeigt beispielhaft einen Oktaeder, wobei solche Oktaeder ebenfalls dazu verwendet werden können, um das Innenvolumen 18 des Adapters 10 auszufüllen.

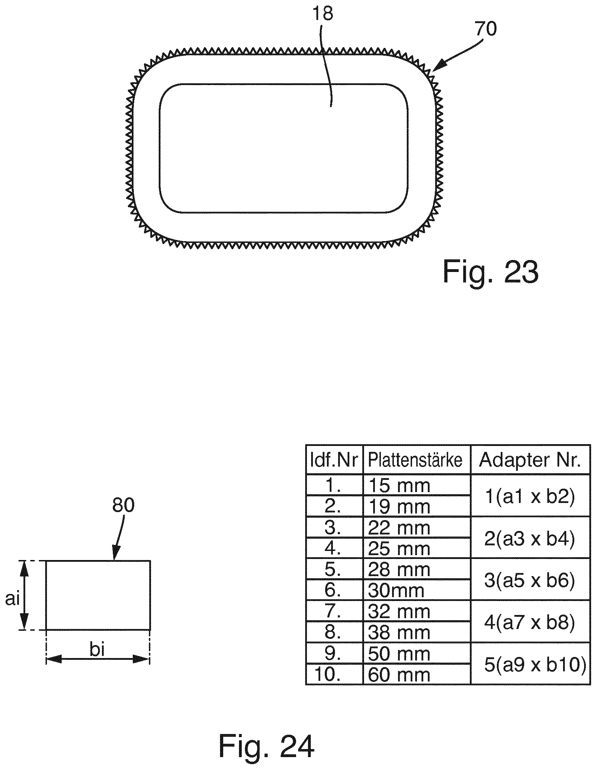

Fig. 23 zeigt einen Adapter 70 gemäß einer weiteren Ausführungsform der Erfindung. Mit Ausnahme seines Innenvolumens 18 ist der Adapter 70 identisch zu dem Adapter 10 der Fig. 1 bis 3 aufgebaut. Der Adapter 70 weist aber ein Innenvolumen 18 auf, das leer ist. In das Innenvolumen 18 kann dadurch ein passender Dübel eingesteckt werden. Werden beispielsweise zwei Leichtbauplatten mit jeweils einem Adapter 70 versehen, so können diese beiden Leichtbauplatten dann mittels des passenden Dübels zusammengesteckt und miteinander verbunden werden. Eine Verbindung zweier Leichtbauplatten ist in einem solchen Fall über Eck oder fluchtend zueinander möglich, da der Adapter 70 ja wie der Adapter 10 sowohl in die Schmalseite einer Leichtbauplatte als auch in die Plattenoberfläche einer Leichtbauplatte eingebracht werden kann.

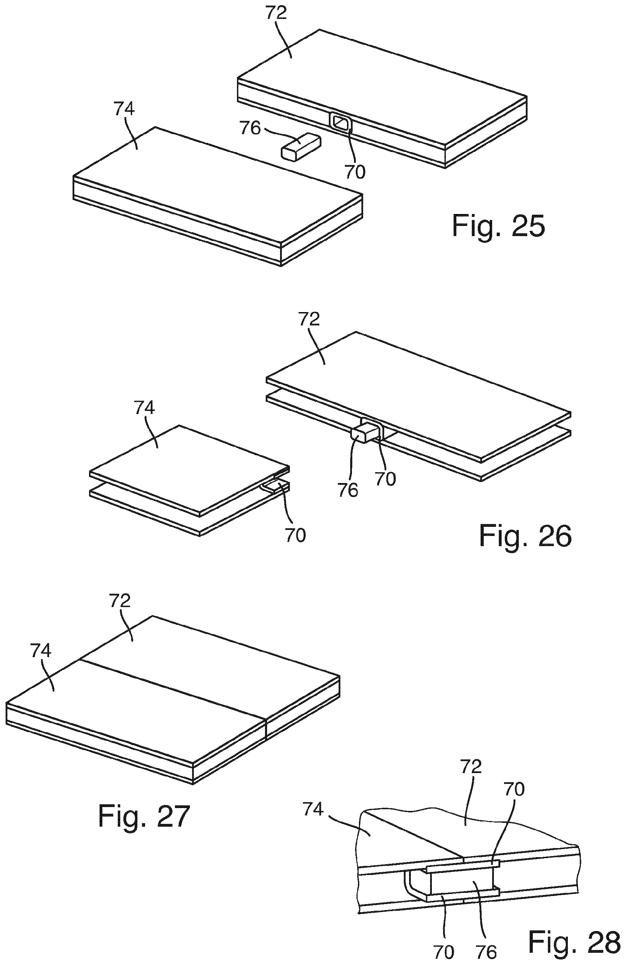

Fig. 25 zeigt zwei Leichtbauplatten 72, 74, die jeweils in ihren einander zugewandten Schmalseiten mit einem Adapter 70 versehen sind, von denen lediglich der Adapter 70 in der Leichtbauplatte 72 zu erkennen ist. Um die beiden Leichtbauplatten 72, 74 miteinander zu verbinden, ist ein Dübel 76 vorgesehen, der zylindrisch ausgebildet ist und eine rechteckartige Querschnittsform mit abgerundeten Ecken aufweist. Diese Querschnittsform entspricht der Querschnittsform des Innenvolumens 18. Der Dübel 76 kann infolgedessen, siehe Fig. 26, in den Adapter 70 in der Schmalseite der Leichtbauplatte 72 eingesteckt werden. In Fig. 26 ist die zweite Leichtbauplatte 74 geschnitten dargestellt, so dass nun der zweite, in der Schmalseite der Leichtbauplatte 74 angeordnete Adapter 70 zu erkennen ist.

Fig. 27 zeigt den verbundenen Zustand der beiden Leichtbauplatten 72, 74. Der Dübel 76 ist nun einerseits in dem Adapter 70 der Leichtbauplatte 72 und andererseits in dem Adapter 70 der Leichtbauplatte 74 verankert. Der Dübel 76 kann in den Adaptern 70 beispielsweise verklebt oder verklemmt werden.

Fig. 28 zeigt eine Schnittansicht der beiden miteinander verbundenen Leichtbauplatten 72, 74 der Fig. 27. Zu erkennen ist, dass der Dübel 76 in den Adaptern 70 jeweils abschnittsweise aufgenommen ist und dadurch die Schmalseiten der beiden Leichtbauplatten 72, 74 miteinander verbindet.

Die Darstellung der Fig. 24 zeigt schematisch einen erfindungsgemäßen Adapter 80, der eine Rechteckform aufweist. Der Adapter 80 weist eine Breite bᵢ und eine Höhe aᵢ auf. Sind mehrere Adapter 80 in unterschiedlichen Größen vorgesehen, so können diese mehreren Adapter ein Adaptersystem bilden, das für Leichtbauplatten mit unterschiedlichen Plattenstärken bzw. Plattendicken eingesetzt werden kann. Der in Fig. 24 schematisch dargestellte Adapter 80 kann selbstverständlich identisch ausgebildet sein zum Adapter 10, wie er in den Fig. 1 bis 3 dargestellt ist.

Der Tabelle der Fig. 24 ist zu entnehmen, dass ein Adapter mit der Höhe a₁ und der Breite b₂ für Leichtbauplatten mit der Plattenstärke 15 mm und 19 mm verwendet werden kann. Für eine Leichtbauplatte mit einer Plattenstärke von 15 mm wird der Adapter so angeordnet, dass die längere Seite bᵢ parallel zu den Plattenoberflächen angeordnet ist. Für die dickere Leichtbauplatte mit einer Dicke von 19 mm wird der Adapter 80 so angeordnet, dass die kürzeren Seiten mit der Höhe aᵢ parallel zu den Plattenoberflächen angeordnet werden.

Auf diese Weise kann, je nachdem, wie seine Ausrichtung gewählt wird, jeder Adapter für zwei unterschiedliche Plattenstärken eingesetzt werden. Ein Adaptersystem mit fünf unterschiedlich großen Adaptern, entsprechend der Tabelle der Fig. 24, kann somit dafür verwendet werden, um insgesamt zehn Leichtbauplatten mit unterschiedlichen Plattenstärken zwischen 15 mm und 60 mm miteinander zu verbinden. In einem solchen Adaptersystem können unterschiedlich große Adapter mit unterschiedlichen Farben gekennzeichnet sein.

Der erfindungsgemäße Adapter ist in besonderer Weise für Leichtbauplatten geeignet, kann aber ebenfalls vorteilhaft bei Spanplatten, Sandwichplatten oder Platten aus Vollmaterial eingesetzt werden. Beispielsweise kann der Adapter auch in Platten aus porösen Holzwerkstoff eingesetzt werden, die über ihre gesamte Dicke eine konstante mechanische Festigkeit aufweisen.

## Patentansprüche

1. Adapter (10; 70; 80) für Platten, insbesondere mit zwei gegenüberliegenden Deckbereichen und einem Kern, wobei die Deckbereiche gegenüber dem Kern mechanisch höher belastbar sind, insbesondere für Leichtbauplatten (30; 72, 74), wobei die Leichtbauplatten (30; 72, 74) eine erste Deckplatte (32), eine zweite Deckplatte (34) und einen zwischen den Deckplatten (32, 34) angeordneten Kern mit gegenüber den Deckplatten (32, 34) geringerer Dichte, insbesondere einen Wabenkern, aufweisen, wobei der Adapter (10; 70; 80) eine erste Stirnseite (12), eine der ersten Stirnseite (12) gegenüberliegende zweite Stirnseite (14) und einen, sich zwischen den Stirnseiten (12, 14) erstreckenden Mantel (16) aufweist, wobei wenigstens die erste Stirnseite (12) eine rechteckartige, quadratartige oder ovale Form aufweist, wobei wenigstens ein an die erste Stirnseite (12) anstoßender Randabschnitt des Mantels (16) mit radial nach außen gerichteten Rippen (20) versehen ist, und/oder dass die zweite Stirnseite (14) wenigstens in ihrem Randbereich abschnittsweise mit senkrecht zur Stirnseite (14) abragenden Vorsprüngen (26) versehen ist, wobei ein zwischen den Stirnseiten (12, 14) liegendes Innenvolumen (18) des Adapters (10) zum Anordnen von Dübeln, Schrauben, Spreizdübeln oder Befestigungsabschnitten von Bauteilen ausgebildet ist, **dadurch gekennzeichnet, dass** das zwischen den Stirnseiten (12, 14) liegendes Innenvolumen (18) des Adapters (10) mit einer Rippenstruktur ausgefüllt ist und dass die Rippenstruktur im Innenvolumen wenigstens abschnittsweise eine Quadratgitterstruktur oder eine Dreieckgitterstruktur aufweist oder dass das zwischen den Stirnseiten (12, 14) liegendes Innenvolumen (18) des Adapters (10) mit einer Hohlkörperstruktur ausgefüllt ist und dass die Hohlkörperstruktur im Innenvolumen wenigstens abschnittsweise tetraederförmige oder oktaederförmige Hohlkörper aufweist.

2. Adapter nach wenigstens einem der vorstehenden Ansprüche, **dadurch gekennzeichnet, dass** die erste Stirnseite (12) rechteckförmig mit abgerundeten Ecken oder oval ausgebildet ist.

3. Adapter nach wenigstens einem der vorstehenden Ansprüche, **dadurch gekennzeichnet, dass** der Adapter (10; 70; 80) aus Kunststoff oder Metall gebildet ist.

4. Adapter nach Anspruch 3, **dadurch gekennzeichnet, dass** der Adapter (10; 70; 80) mittels eines additiven Verfahrens, insbesondere eines 3-D-Druckverfahrens, hergestellt ist.

5. Adapter nach wenigstens einem der vorstehenden Ansprüche, **dadurch gekennzeichnet, dass** sich der Adapter in mindestens einem Abschnitt in einer Richtung von der ersten Stirnseite zur zweiten Stirnseite verjüngt.

6. Adapter nach Anspruch 5, **dadurch gekennzeichnet, dass** in einer Schnittebene senkrecht zu der ersten Stirnseite der Adapter einen trapezförmigen Querschnitt aufweist.

7. Adaptersystem mit mehreren Adaptern (10; 70; 80) nach wenigstens einem der vorstehenden Ansprüche, **dadurch gekennzeichnet, dass** wenigstens die erste Stirnseite eine rechteckartige Form aufweist, wobei sich die Längs- und Querabmessungen der ersten Stirnseiten zwischen den mehreren Adaptern unterscheiden und auf unterschiedliche Abstände von Deckplatten von Leichtbauplatten abgestimmt sind.

8. Adaptersystem nach Anspruch 7, **dadurch gekennzeichnet, dass** Adapter (10; 70; 80) mit unterschiedlichen Abmessungen unterschiedliche Markierungen, beispielsweise unterschiedliche Farben oder unterschiedliche Farbmarkierungen, aufweisen.

## Claims

1. Adapter (10; 70; 80) for panels, in particular having two mutually opposite cover regions and a core, wherein the cover regions are mechanically more highly loadable than the core, in particular for lightweight construction panels (30; 72, 74), wherein the lightweight construction panels (30; 72, 74) have a first cover panel (32), a second cover panel (34) and, arranged between the cover panels (32, 34) a core having a lower density than the cover panels (32, 34), in particular a honeycomb core, wherein the adapter (10; 70; 80) has a first end face (12), a second end face (14) situated opposite the first end face (12), and a casing (16) extending between the end faces (12, 14), wherein at least the first end face (12) has a rectangular shape or a shape similar thereto, square shape or a shape similar thereto, or oval shape, wherein at least one edge portion of the casing (16) that abuts the first end face (12) is provided with radially outwardly directed ribs (20), and/or that the second end face (14), at least in its edge region, is provided in certain portions with projections (26) which project perpendicularly to the end face (14), wherein an internal volume (18) of the adapter (10) that is situated between the end faces (12, 14) is designed for arranging dowels, screws, expansion dowels or fastening portions of components, **characterized in that** the internal volume (18) of the adapter (10) that is situated between the end faces (12, 14) is filled with a rib structure, and **in that** the rib structure in the internal volume has, at least in certain portions, a square lattice structure or a triangular lattice structure, or **in that** the internal volume (18) of the adapter (10) that is situated between the end faces (12, 14) is filled with a hollow body structure, and **in that** the hollow body structure in the internal volume has, at least in certain portions, tetrahedral or octahedral hollow bodies.

2. Adapter according to at least one of the preceding claims, **characterized in that** the first end face (12) is rectangular with rounded corners or oval.

3. Adapter according to at least one of the preceding claims, **characterized in that** the adapter (10; 70; 80) is formed from plastic or metal.

4. Adapter according to Claim 3, **characterized in that** the adapter (10; 70; 80) is produced by means of an additive method, in particular a 3D printing method.

5. Adapter according to at least one of the preceding claims, **characterized in that** the adapter tapers in a direction from the first end face to the second end face in at least one portion.

6. Adapter according to Claim 5, **characterized in that** the adapter has a trapezoidal cross section in a section plane perpendicular to the first end face.

7. Adapter system comprising a plurality of adapters (10; 70; 80) according to at least one of the preceding claims, **characterized in that** at least the first end face has a rectangular shape or a shape similar thereto, wherein the longitudinal and transverse dimensions of the first end faces differ between the plurality of adapters and are tailored to different spacings of cover panels of lightweight construction panels.

8. Adapter system according to Claim 7, **characterized in that** adapters (10; 70; 80) with different dimensions have different markings, for example different colours or different colour markings.

## Revendications

1. Adaptateur (10 ; 70 ; 80) pour panneaux, en particulier avec deux zones de recouvrement opposées et une âme, les zones de recouvrement étant aptes à être plus fortement sollicitées mécaniquement que l'âme, en particulier pour des panneaux légers (30 ; 72, 74), les panneaux légers (30 ; 72, 74) présentant une première plaque de recouvrement (32), une deuxième plaque de recouvrement (34) et une âme disposée entre les plaques de recouvrement (32, 34) avec une densité plus faible par rapport aux plaques de recouvrement (32, 34), en particulier une âme en nid d'abeilles, l'adaptateur (10 ; 70 ; 80) présentant une première face frontale (12), une deuxième face frontale (14) opposée à la première face frontale (12) et une enveloppe (16) s'étendant entre les faces frontales (12, 14), au moins la première face frontale (12) présentant une forme rectangulaire ou une forme similaire à cet égard, carrée ou une forme similaire à cet égard, ou ovale, au moins une portion de bord de l'enveloppe (16) contiguë à la première face frontale (12) étant pourvue de nervures (20) orientées radialement vers l'extérieur, et/ou en ce que la deuxième face frontale (14) est munie, au moins dans sa zone de bord, de façon partielle, de saillies (26) faisant saillie perpendiculairement à la face frontale (14), un volume intérieur (18) de l'adaptateur (10) situé entre les faces frontales (12, 14) étant conçu pour disposer des chevilles, des vis, des chevilles à expansion ou des parties de fixation d'éléments, **caractérisé en ce que** le volume intérieur (18) de l'adaptateur (10) situé entre les faces frontales (12, 14) est rempli d'une structure nervurée et **en ce que** la structure nervurée dans le volume intérieur présente au moins partiellement une structure en grille carrée ou une structure en grille triangulaire ou **en ce que** le volume intérieur (18) de l'adaptateur (10) situé entre les faces frontales (12, 14) est rempli d'une structure de corps creux et **en ce que** la structure de corps creux dans le volume intérieur présente au moins partiellement des corps creux en forme de tétraèdre ou d'octaèdre.

2. Adaptateur selon au moins une des revendications précédentes, **caractérisé en ce que** la première face frontale (12) est de forme rectangulaire avec des coins arrondis ou ovales.

3. Adaptateur selon au moins une des revendications précédentes, **caractérisé en ce que** l'adaptateur (10 ; 70 ; 80) est formé de matière plastique ou de métal.

4. Adaptateur selon la revendication 3, **caractérisé en ce que** l'adaptateur (10 ; 70 ; 80) est réalisé par un procédé additif, notamment un procédé d'impression 3D.

5. Adaptateur selon au moins une des revendications précédentes, **caractérisé en ce que** l'adaptateur se rétrécit dans au moins une portion dans une direction allant de la première face frontale à la deuxième face frontale.

6. Adaptateur selon la revendication 5, **caractérisé en ce que** dans un plan de coupe perpendiculaire à la première face frontale, l'adaptateur présente une section transversale trapézoïdale.

7. Système d'adaptateurs avec plusieurs adaptateurs (10 ; 70 ; 80) selon au moins une des revendications précédentes, **caractérisé en ce qu'**au moins la première face frontale présente une forme rectangulaire ou une forme similaire à cet égard, les dimensions longitudinales et transversales des premières faces frontales étant différentes entre les plusieurs adaptateurs et étant adaptées à différentes distances de plaques de recouvrement de panneaux légers.

8. Système d'adaptateurs selon la revendication 7, **caractérisé en ce que** les adaptateurs (10 ; 70 ; 80) de dimensions différentes présentent des marquages différents, par exemple des couleurs différentes ou des marquages de couleur différents.
